(19) Europäisches Patentamt
European Patent Office
Office européen des brevets

(11) **EP 3 066 495 B1**

(12) **EUROPÄISCHE PATENTSCHRIFT**

(45) Veröffentlichungstag und Bekanntmachung des Hinweises auf die Patenterteilung:
**08.04.2020 Patentblatt 2020/15**

(51) Int Cl.:
*G01T 1/16* *(2006.01)*      *G01T 1/20* *(2006.01)*

(21) Anmeldenummer: **14818902.0**

(22) Anmeldetag: **08.12.2014**

(86) Internationale Anmeldenummer:
**PCT/EP2014/076913**

(87) Internationale Veröffentlichungsnummer:
**WO 2015/091067 (25.06.2015 Gazette 2015/25)**

(54) **HYBRID-ORGANISCHER RÖNTGENDETEKTOR MIT LEITFÄHIGEN KANÄLEN**

HYBRID ORGANIC X-RAY DETECTOR WITH CONDUCTIVE CHANNELS

DÉTECTEUR HYBRID ORGANIQUE DE RAYONS X AVEC CANAUX CONDUCTEURS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2013 DE 102013226365**

(43) Veröffentlichungstag der Anmeldung:
**14.09.2016 Patentblatt 2016/37**

(73) Patentinhaber: **Siemens Healthcare GmbH**
**91052 Erlangen (DE)**

(72) Erfinder:
• **BÜCHELE, Patric**
**89129 Langenau (DE)**
• **HARTMANN, David**
**91056 Erlangen (DE)**
• **SCHMIDT, Oliver**
**91052 Erlangen (DE)**
• **TEDDE, Sandro Francesco**
**91085 Weisendorf (DE)**

(56) Entgegenhaltungen:
EP-A2- 2 453 263      DE-A1- 10 137 012
US-A1- 2013 032 720

EP 3 066 495 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft einen Detektor aufweisend die Merkmale des Anspruchs 1, sowie ein Verfahren zur Herstellung eines entsprechenden Detektors gemäß Anspruch 9.

Stand der Technik

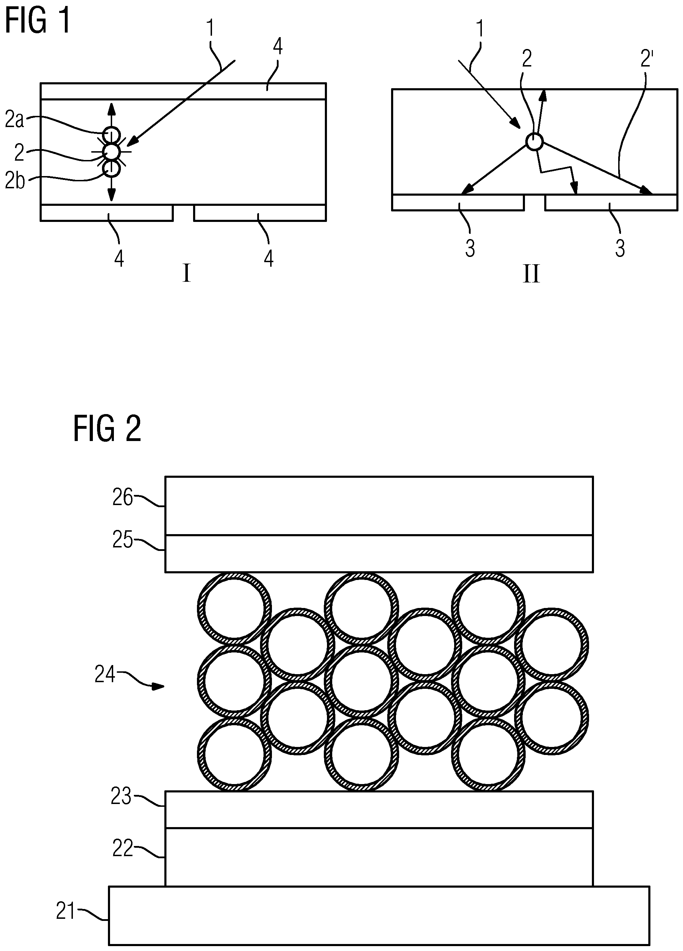

Die Erfindung adressiert eine neuartige Herstellmethode für digitale Röntgendetektoren, wie sie u.a. in der medizinischen Diagnostik Anwendung finden. Den heutigen Stand der Technik stellen Detektoren auf Basis von amorphem Silizium (indirekte Wandlung) und amorphem Selen (direkte Wandlung) dar. Die Prinzipien für direkte Wandlung (links) und indirekte Wandlung (rechts) sind in Figur 1 dargestellt. Bei der direkten Wandlung I regt ein Röntgenquant 1 ein Teilchen 2 an, wobei Elektron/Loch-Paare 2a, 2b erzeugt werden, die dann zu den Elektroden 4 (Anode bzw. Kathode, beispielsweise Pixel-Elektroden) wandern und dort detektiert werden. Bei der indirekten Wandlung II regt der Röntgenquant 1 das Teilchen 2 an, welches wiederum Strahlung 2' mit geringerer Energie (z.B. sichtbares Licht, UV- oder IR-Strahlung) abgibt, die dann mittels eines Photodetektors 3 (z.B. Photodiode) detektiert wird.

Indirekte Röntgenkonversion beinhaltet also beispielsweise die Kombination einer Szintillatorschicht (z.B. $Gd_2O_2S$ oder CsI mit unterschiedlichen Dotierstoffen wir Terbium, Thallium, Europium, etc.; Schichtdicken typischerweise 0,1-1 mm) und eines Photodetektors (vorzugsweise Photodiode). Die Emissionswellenlänge des Szintillatorlichtes durch Röntgenkonversion überdeckt hierbei mit der spektralen Empfindlichkeit des Photodetektors.

Im Fall der direkten Röntgenkonversion wird wiederum beispielsweise die Röntgenstrahlung direkt in Elektron/Loch Paare umgewandelt und diese elektronisch ausgelesen (z.B. amorphes Se). Direkte Röntgenkonversion in Selen wird üblicherweise mit bis zu 1 mm dicken Schichten vorgenommen, die im kV-Bereich in Sperrrichtung vorgespannt sind. Während sich indirekt wandelnde Detektoren insbesondere aufgrund ihrer leichten und kostengünstigen Herstellbarkeit durchgesetzt haben, weisen Direktwandler ein deutlich besseres Auflösungsvermögen auf.

Die Herstellung der Detektoren umfasst gewöhnlich das Einbringen der anorganischen Absorbermaterialien wie z.B. Quantenpunkten oder typischen Szintillatormaterialien in eine organische Matrix. Organische Halbleiter können aus der Flüssigphase leicht auf große Flächen appliziert werden und durch die direkte Einmischung der anorganischen Szintillatorkörner kann der optische Cross-Talk deutlich minimiert werden.

Organische Halbleiter weisen im Gegensatz zu anorganischen Halbleitern eine geringere Leitfähigkeit auf. Diese beschränkte Leitfähigkeit wird problematisch, wenn, wie beispielsweise bei der Röntgenabsorption, sehr dicke Schichten benötigt werden, um eine ausreichende Sensitivität zu erreichen. Einerseits wird dadurch die Effizienz der Photodiode herabgesetzt, da die Ladungsträgerextraktion behindert wird. Zum anderen sinkt die Geschwindigkeit der Photodiode, was einen Gebrauch für medizintechnische Geräte stark limitiert. Zusätzlich wird durch die eingemischten röntgenstrahlenabsorbierenden Partikel, welche nicht leitfähig sind, der Ladungsträgerweg negativ beeinflusst und verlängert.

Organische Halbleiter werden überwiegend aus der Flüssigphase appliziert oder im Vakuum aufgedampft. Alle bis heute bekannten Methoden zur Einmischung von anorganischen Absorber-Materialien nutzen die Verarbeitung aus der Flüssigphase:
Die US 6483099 B1 beschreibt die Möglichkeit einer Röntgendetektion mit einer Szintillatorschicht auf einer OPD (organischen Photodiode). Weitere Ausführungen sind Röntgendetektion durch Einmischung ("admixture") von Szintillatoren in eine OPD, Szintillator als Substrat oder als Teil der Elektrode. Keine Angaben werden gemacht, wie ein Szintillator homogen in eine dicke OPD Schicht eingebracht werden kann bzw. wie eine z.B. 100 μm dicke hybride Diode hergestellt werden kann.

Die DE 101 37 012 A1 offenbart eine Ausführung einer lichtempfindlichen und polymeren Absorberschicht mit eingebetteten Szintillatorkörnern. Die Leitfähigkeit der Polymerschicht erhöht sich durch Absorption von Licht aus dem Szintillator. Der mittlere Abstand der Szintillatorkörner in der Schicht entspricht der mittleren freien Weglänge der Photonen aus dem Szintillator im Polymer.

Die DE 10 2008 029 782 A1 beschreibt einen Röntgendetektor basierend auf Quantenpunkten welche in die organische Halbleitermatrix eingemischt werden. In diesem Konzept werden die Quantenpunkte in die organische Halbleiterlösung eindispergiert. Dabei kommen Liganden, wie Ölsäure o.ä. zum Einsatz, welches die elektrischen Eigenschaften des organischen Halbleiters beeinflussen kann.

Die DE 10 2010 043 749 A1 betrifft einen Röntgendetektor basierend auf dem oben beschriebenen Konzept, wobei Szintillatoren entweder direkt in die organische Halbleiter-Lösung eindispergiert werden oder in einem "Ko-Sprüh-Prozess" gleichzeitig mit dem organischen Halbleitermaterial aufgesprüht werden.

EP 2 453 263 A2 offenbart einen Röntgendetektor mit einer hybriden fotoaktiven Schicht, die eine Mehrzahl an Szintillatoren und eine "Bulk-Heterojunction" umfasst. Die Szintillatoren dienen zur Konversion der Röntgenstrahlung in Szintillationsstrahlung. Die "Bulk-Heterojunction" absorbiert die Szintillatorstrahlung unter Bildung von Elektron-Loch-Paaren, die dann mittels zweier Elektroden detektiert werden.

US 2013/032720 A1 offenbart eine Zusammensetzung für einen "Strahlungsbilddetektor" umfassend eine organische Matrix mit einem "Ladungstransportmaterial" und szintillierende Partikel zur Absorption der Strahlung, die in der organischen Matrix dispergiert sind. Die szintillierenden Partikel sind in Kontakt mit dem "Ladungstransportmaterial".

Es besteht weiterhin Bedarf an verbesserten Detektoren.

Zusammenfassung der Erfindung

Die vorliegende Erfindung ist gerichtet auf die Herstellung von Röntgendetektoren basierend auf anorganischen Absorbermaterialien wie z.B. Quantenpunkten oder typischen Szintillatormaterialien, welche in eine organische Halbleitermatrix eingemischt werden. Diese Kombination verspricht die Vorteile beider vorgenannten Konzepte (indirekte Konversion und direkte Konversion) miteinander zu vereinen. Organische Halbleiter können aus der Flüssigphase leicht auf große Flächen appliziert werden, und durch die direkte Einmischung der anorganischen Szintillatorkörner kann der optische Cross-Talk deutlich minimiert werden.

Entgegen der naheliegenden Annahme, dass man einen Kompromiss zwischen hohem Szintillator-Anteil (=gute Röntgenabsorption) und hohem Organik-Anteil (gute Leitfähigkeit) in solchen Detektoren finden muss, wurde erfindungsgemäß gefunden, dass hohe Szintillatoranteile vorteilhaft sind, um leitfähige Kanäle unter Röntgenanregung zu generieren.

Erfindungsgemäß wird das optimale Mischungsverhältnis von Szintillator zu Organik offenbart, um die oben genannte Problemstellung zu lösen.

Gemäß einem ersten Aspekt betrifft die vorliegende Erfindung einen Detektor für hochenergetische Strahlung, insbesondere für Röntgen-, Gamma- und/oder UV-Strahlung, umfassend:

- (a) ein Substrat mit einem ersten elektrischen Kontakt;
- (b) optional eine erste Zwischenschicht;
- (c) eine Schicht umfassend eine organische Matrix eines photoaktiven Materials und darin verteilte, nicht lösliche Szintillatorpartikel;
- (d) optional eine zweite Zwischenschicht; und
- (e) einen zweiten elektrischen Kontakt; wobei das Mischungsverhältnis zwischen Szintillatorpartikeln und organischer Matrix in der Schicht (c) so gewählt wird, dass der mit der organischen Matrix gefüllte Zwischenraum jeweils einen Abstand zwischen zwei benachbarten Szintillatorpartikeln aufweist, der im Wesentlichen maximal der fünffachen Eindringtiefe der emittierten Strahlung der Szintillatorpartikel entspricht, wobei

das Mischungsverhältnis zwischen Szintillatorpartikeln und organischer Matrix so gewählt wird, dass die kumulierte Dicke der organischen Matrix zwischen den beiden Kontakten mindestens dreimal der Eindringtiefe entspricht.

Gemäß einem weiteren Aspekt betrifft die vorliegende Erfindung zudem ein Verfahren zur Herstellung eines Detektors für hochenergetische Strahlung, insbesondere für Röntgen-, Gamma- und/oder UV-Strahlung, umfassend:

(i) Bereitstellen eines Substrats mit einem ersten elektrischen Kontakt;
(ii) optional Beschichten mit einer ersten Zwischenschicht;
(iii) Beschichten mit einer Schicht umfassend eine organische Matrix eines photoaktiven Materials und darin verteilte, nicht lösliche Szintillatorpartikel;
(iv) optional Beschichten mit einer zweiten Zwischenschicht; und
(v) Beschichten mit einem zweiten elektrischen Kontakt; wobei

das Mischungsverhältnis zwischen Szintillatorpartikeln und organischer Matrix beim Beschichten in Schritt (iii) so gewählt wird, dass der mit der organischen Matrix gefüllte Zwischenraum jeweils einen Abstand zwischen zwei benachbarten Szintillatorpartikeln aufweist, der im Wesentlichen maximal der fünffachen absorbierten Wellenlänge der emittierten Strahlung der Szintillatorpartikel entspricht, wobei

das Mischungsverhältnis zwischen Szintillatorpartikeln und organischer Matrix so gewählt wird, dass die kumulierte Dicke der organischen Matrix zwischen den beiden Kontakten mindestens dreimal der Eindringtiefe entspricht.

Weitere Aspekte der vorliegenden Erfindung sind den abhängigen Ansprüchen und der detaillierten Beschreibung zu entnehmen.

Beschreibung der Figuren

Die beiliegenden Zeichnungen sollen Ausführungsformen der vorliegenden Erfindung veranschaulichen und ein weiteres Verständnis dieser vermitteln. Im Zusammenhang mit der Beschreibung dienen sie der Erklärung von Konzepten und Prinzipien der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander dargestellt. Gleiche, funktionsgleiche und gleich wirkende Elemente, Merkmale und Komponenten sind in den Figuren der Zeichnungen, sofern nichts anderes ausgeführt ist, jeweils mit denselben Bezugszeichen versehen.

Figur 1     stellt schematisch die Konzepte der direkten Röntgenkonversion und der indirekten Röntgenkonversion gegenüber.

Figur 2     zeigt schematisch eine beispielhafte Anordnung eines Stacks eines erfindungsgemäßen Detektors.

Figur 3     stellt schematisch einen beispielhaften Abstand dar, den zwei Szintillatorkörner/Szintillatorpartikel erfindungsgemäß haben.

Figur 4     zeigt beispielhaft das Abstimmen der Emission von Szintillatorpartikeln mit der Absorption der organischen Matrix.

Figur 5     zeigt die Abhängigkeit der Reaktionszeit einer Photodiode in einem erfindungsgemäßen Detektor in Abhängigkeit vom Anteil der Szintillatorpartikel.

Figur 6     zeigt die Konversionsrate von Röntgenquanten zu detektierten Elektronen in einem erfindungsgemäßen Detektor in Abhängigkeit des SzintillatorpartikelAnteils x.

Figur 7     zeigt schematisch das Funktionsprinzip eines Detektors bei niedrigem Anteil an Szintillatorpartikeln.

Figur 8     zeigt schematisch das Funktionsprinzip eines Detektors bei hohem Anteil an Szintillatorpartikeln.

Figur 9     stellt schematisch mögliche Verlustpfade in einem Detektor bei sehr hohem Anteil an Szintillatorpartikeln dar.

Detaillierte Beschreibung der Erfindung

Gemäß einem Aspekt betrifft die vorliegende Erfindung einen Detektor für hochenergetische Strahlung, insbesondere für Röntgen- und/oder UV-Strahlung, umfassend:

- (a) ein Substrat mit einem ersten elektrischen Kontakt;
- (b) optional eine erste Zwischenschicht;
- (c) eine Schicht umfassend eine organische Matrix eines photoaktiven Materials und darin verteilte, nicht lösliche Szintillatorpartikel;
- (d) optional eine zweite Zwischenschicht; und
- (e) einen zweiten elektrischen Kontakt; wobei das Mischungsverhältnis zwischen Szintillatorpartikeln und organischer Matrix in der Schicht (c) so gewählt wird, dass der mit der organischen Matrix gefüllte Zwischenraum jeweils einen Abstand zwischen zwei benachbarten Szintillatorpartikeln aufweist, der im Wesentlichen maximal der fünffachen Eindringtiefe der emittierten Strahlung der Szintillatorpartikel entspricht, wobei das Mischungsverhältnis zwischen Szintillatorpartikeln und organischer Matrix so gewählt wird, dass die kumulierte Dicke der organischen Matrix zwischen den beiden Kontakten mindestens dreimal der Eindringtiefe entspricht.

Der Abstand zwischen zwei benachbarten Szintillatorpartikeln beträgt dabei im Wesentlichen maximal die fünffache Eindringtiefe, wenn der Abstand von mindestens 70% der benachbarten Szintillatorpartikel maximal der fünffachen Eindringtiefe entspricht, bevorzugt mindestens 80%, weiter bevorzugt mindestens 90%. Gemäß besonders bevorzugten Ausführungsformen sind die Szintillatorpartikel, also 100 % der Szintillatorpartikel, so verteilt, dass sie einen Abstand zwischen zwei benachbarten Szintillatorpartikeln aufweisen, der maximal der fünffachen Eindringtiefe der emittierten Strahlung der Szintillatorpartikel entspricht
Bevorzugt sind die Szintillatorpartikel dabei im Wesentlichen homogen verteilt. Im Wesentlichen homogen verteilt sind die Szintillatorpartikel hierbei, wenn der Abstand von benachbarten Szintillatorpartikel voneinander im Wesentlichen gleich ist, wobei hierbei der jeweilige Abstand von 90% der gesamten Szintillatorpartikel zueinander im Schnitt nicht mehr als 50 Prozent, bevorzugt nicht mehr als 30 %, weiter bevorzugt nicht weniger als 10 % vom durchschnittlichen Abstand im Falle einer homogenen Verteilung der Szintillatorpartikel abweicht.
Gemäß einer bevorzugten Ausführungsform sind die nicht löslichen Szintillatorpartikel in der Schicht umfassend eine organische Matrix eines photoaktiven Materials darin homogen verteilt.
Die Eindringtiefe lässt sich hierbei aus dem Lambert-Beer'schen Gesetz ableiten: $I = I\_0 * \exp(-alpha*d)$

I         = transmittierte Intensität

$I\_0$     = initiierte Intensität

alpha   = Absorptionskoeffizient

d         = Schichtdicke/durchdrungene Tiefe des Mediums.

Die Eindringtiefe delta ist definiert als die Schichtdicke, bei der die Intensität der elektromagnetischen Strahlung auf ein 1/e-ten Teil des Ausgangswertes gefallen ist, und somit der reziproke Wert des wellenlängenabhängigen Absorptionskoeffizients.

$$delta=1/alpha$$

Beispielsweise entspricht bei einer P3HT:PCBM Donor-Akzeptor Gemisch/Bulk-Hetero-Junction der Absorptionskoeffizient bei grünem Licht (Wellenlänge 550nm) etwa 7,7e+04 cm-1, was einer Eindringtiefe von delta = 130 nm entspricht.

Für eine gute Funktionsfähigkeit des erfindungsgemäßen Detektors sollte der gesamte Zwischenraum zwischen zwei Partikeln mittels emittierter Photonen angeregt werden. Dies ist erfindungsgemäß gewährleistet, wenn beispielsweise die Intensität auf nicht weniger als 10% abgefallen ist. Im gewählten Beispiel wäre das bei etwa 300 nm der Fall, so dass hier also bei zwei Partikeln diese sogar etwa 600nm auseinander liegen können, was dann etwa der fünffachen Eindringtiefe entspricht. Bei der fünffachen Eindringtiefe wird somit eine gute Absorption des emittierten Lichts der Szintillatorpartikel gewährleistet.

Gemäß bestimmten Ausführungsformen entspricht der jeweilige Abstand zwischen zwei Szintillatorpartikeln weniger als der dreifachen Eindringtiefe der emittierten Strahlung des Szintillatorpartikels.

Gemäß bevorzugten Ausführungsformen ist der Abstand zwischen zwei benachbarten Szintillatorpartikeln maximal der dreifachen Eindringtiefe der emittierten Strahlung der Szintillatorpartikel, und gemäß besonders bevorzugten Ausführungsformen ist der Abstand zwischen zwei benachbarten Szintillatorpartikeln maximal die doppelte Eindringtiefe der emittierten Strahlung der Szintillatorpartikel. In so einem Fall (doppelte Eindringtiefe) wird der Ladungstransport in der Matrix durch Erzeugung leitfähiger Kanäle zwischen zwei benachbarten Szintillatorpartikeln unter Röntgenanregung effizient verbessert.

Weiterhin liegt der Abstand zwischen zwei Szintillatorpartikeln in bestimmten Ausführungsformen zwischen 30 bis 3000 nm, bevorzugt zwischen 100 bis 900 nm. Zudem sind die Szintillatorpartikel gemäß bestimmten Ausführungsformen so angeordnet, dass sich die leitfähigen Zonen, die durch die Emission der Szintillatorpartikel erzeugt werden, überschneiden und so ein schnelles Ansprechverhalten erreicht werden kann.

Gemäß bestimmten Ausführungsformen haben die Szintillatorpartikel einen Durchmesser von 0,01 bis 50 $\mu$m. Dieser kann geeignet gemäß einer optischen (z.B. dynamische Lichtstreuung, DLS), elektronenmikroskopischen oder elektrischen Analyse (z.B. Coulter Counter) bestimmt werden und somit eingestellt werden. Mit abnehmendem Durchmesser der Partikel nimmt die Emissionsstärke im Allgemeinen ab. Gemäß bevorzugten Ausführungsformen haben die Szintillatorpartikel einen Durchmesser von 0,1-30 $\mu$m, bevorzugt 1-10 $\mu$m, welche auf die Interaktionslänge von hochenergetischen Elektronen, welche durch Röntgenquanten ausgelöst werden, angepasst ist. Für die Detektion von UV Strahlung äußert sich der Abfall weniger gravierend, weswegen hier auch kleinere Partikel mit bis zu 10 nm Durchmesser zum Einsatz kommen können.

Das Mischungsverhältnis zwischen Szintillatorpartikeln und organischer Matrix wird so gewählt, dass die kumulierte Dicke der organischen Matrix zwischen den beiden Kontakten mindesten dreimal der Eindringtiefe entspricht. Auf diese Weise wird sichergestellt, dass keine von den Szintillatorpartikeln emittierten Photonen den Detektor verlassen, ohne absorbiert zu werden. Beispielsweise entspricht dies bei Verwendung von P3HT:PCBM als organische Matrix und einem Szintillator mit Emissionswellenlänge im grünen Spektralbereich einer kumulierten Dicke von mindestens etwa 0,4 $\mu$m unabhängig von der gewählten Gesamtdicke der Detektionsschicht. Auf diese Weise kann gewährleistet werden, dass Licht ausreichend in der Matrix absorbiert wird, selbst wenn die Szintillatorpartikel nicht im Wesentlichen homogen verteilt sind. Um diese Bedingung zu erfüllen ist demnach für dickere Detektionsschichten ein geringerer Massenanteil von organischer Matrix nötig als für dünnere Detektionsschichten. Dennoch ist gemäß bestimmten Ausführungsformen der Abstand zwischen zwei Szintillatorpartikeln in der organischen Matrix für mindestens 90 % der Szintillatorpartikel, bevorzugt für alle Szintillatorpartikel, wenigstens 10 nm, um einen ausreichenden Zusammenhalt der Matrix und der Szintillatorpartikel zu gewährleisten, weiter bevorzugt wenigstens 20 nm oder wenigstens 30 nm.

Gemäß bestimmten Ausführungsformen kann die organische Matrix mehr als ein photoaktives Material umfassen und/oder der Detektor mehr als eine Art von Szintillatorpartikeln umfassen.

Gemäß bestimmten Ausführungsformen liegt das photoaktive Material in Form einer Donor/Akzeptor-Mischung vor. Die Donor/Akzeptor-Mischung wird hierbei auch als Bulk-Hetero-Junction bezeichnet.

Ein typischer Vertreter eines starken Elektronen-Donators (niedrige Elektronenaffinität) ist z.B. das konjugierte Polymer Poly-(3-hexylthiophen) (P3HT). Typische Materialien für Elektronenakzeptoren (hohe Elektronenaffinität) sind Fullerene und ihre Derivate wie z.B. [6,6]-Phenyl-$C_{61}$Butansäuremethylester (PCBM). Daneben können aber auch Materialien wie Polyphenylenvinylen und dessen Derivate wie das Cyanoderivat CN-PPV, MEH-PPV (Poly(2-(2-ethylhexyloxy)-5-methoxy-p-phenylenvinylen)), CN-MEH-PPV, oder Phthalocyanin, etc., Anwendung finden. Weitere beispielhafte Verbindungen sind unten in Kombination mit geeigneten Szintillatorpartikeln genannt.

Gemäß bestimmten Ausführungsformen ist das Material der organischen Matrix im nicht bestrahlten Zustand des Detektors hochresistiv und wird durch Bestrahlung des Detektors leitfähig. Hierdurch ergibt sich eine zusätzliche Signalverbesserung bei der Detektion, da auch das Hintergrundrauschen minimiert werden kann.

Die Bedingungen für hochresistiv sind hierbei wie folgt: Bei dünnen Dioden ist der Widerstand der Diode in Sperrrichtung im Wesentlichen durch den Kontaktwiderstand gegeben. Dieser sorgt dafür, dass niedrige Dunkelströme erreicht werden. Für die Anwendung eines organischen Fhotodetektors im Umfeld der medizinischen Röntgenbildgebung ist ein Dunkelstrom von höchstens 1e-05 mA/$cm^2$ erforderlich. Dies entspricht bei -1 V Sperrspannung 1e8 Ohm für einen Detektor mit einer Fläche von 1 $cm^2$. Bei dickeren Dioden, wie sie hier beispielhaft vorliegen können, beginnt der Schichtwiderstand eine zunehmende Rolle zu spielen. Der Widerstand der Diode nimmt dann mit zunehmender Schichtdicke zu und man kann einen spezifischen Widerstand angeben. Für eine 100 $\mu$m dicke Schicht ist ein Dunkelstrom von 1e-6 mA/$cm^2$ anzustreben was einem spezifischen Widerstand von 1e-11 Ohm x cm entspricht. Dementsprechend bedeutet hochresistiv im Rahmen der Erfindung bevorzugt, dass der spezifische Widerstand der Schicht mindestens 1e-9 Ohm x cm entspricht, bevorzugt 1e-11 Ohm x cm.

Gemäß bestimmten Ausführungsformen absorbiert das Material der organischen Matrix Strahlung in einem Wellenlängenbereich, in der die Szintillatorpartikel Strahlung emittieren. Gemäß bestimmten Ausführungsformen hat das photoaktive Material der organischen Matrix zudem zumindest ein Absorptionsmaximum bei einer Wellenlänge, welche einer Emissionswellenlänge des Szintillatorpartikels, bevorzugt der Emissionswellenlänge eines Maximums der Emission des Szintillatorpartikels, entspricht.

Beispielhafte Materialkombinationen für eine Kombination von Szintillatorpartikeln mit photoaktiven organischen Materialien für verschiedene Wellenlängen sind wie folgt:
Geeignete grüne Szintillatoren sind beispielsweise $Gd_2O_2S$:Pr,Ce (Gadoliniumoxysulfid, dotiert mit Praseodym und Cer mit einem Emissionsmaximum bei ungefähr 515 nm), $Gd_2O_2S$:Tb (Gadoliniumoxysulfid, dotiert mit Terbium mit einem Emissionsmaximum bei ungefähr 545 nm), $Gd_2O_2S$:Pr,Ce,F (Gadoliniumoxysulfid, dotiert mit Praseodym oder Cer oder Fluor mit einem Emissionsmaximum bei ungefähr 510 nm), YAG:Ce (Yttrium-Aluminum-Granat dotiert mit Cer mit einem Emissionsmaximum bei ungefähr 550 nm), CsI:Tl (Caesiumiodid, dotiert mit Thallium mit einem Emissionsmaximum bei ungefähr 525 nm), $CdI_2$:Eu (Europium-dotiertes Cadmiumiodid mit einem Emissionsmaximum bei ungefähr 580 nm) oder $Lu_2O_3$:Tb (Lutetiumoxid dotiert mit Terbium mit einem Emissionsmaximum bei ungefähr 545 nm), zeichnen sich durch ein Emissionsmaximum im Bereich von 515-580 nm aus und sind damit gut auf das Absorptionsmaximum von Poly(3-hexylthiophen-2,5-diyl) (P3HT) (als beispielhaftes photoaktives Material der organischen Matrix) bei 550nm ausgelegt. Der Szintillator $Bi_4Ge_3O_{12}$ bzw. BGO (Wismutgermanat mit einem Emissionsmaximum bei ungefähr 480 nm) kann gut mit Poly[2-methoxy-5-(2-ethylhexyloxy)-1,4-phenylenvinylen] (MEH-PPV) oder Poly[2-methoxy-5-(3',7'-dimethyloctyloxy)-1,4-phenylenvinylen] (MDMO-PPV) kombiniert werden die eine gute Absorption im Bereich 460-520 nm aufweisen.

Geeignete blaue Szintillatoren sind ebenfalls zu nennen. Eine attraktive Materialkombination mit Emission im blauen stellen $Lu_2SiO_5$:Ce bzw. LSO (Caesium dotiertes Lutetiumoxyorthosilicat mit einem Emissionsmaximum bei ungefähr 420 nm), $Lu_{1.8}Y_{.2}SiO_5$:Ce (mit Cer dotiertes Lutetiumoxyorthosilicat mit einem Emissionsmaximum bei ungefähr 420 nm), $CdWO_4$ (Cadmiumwolframat mit einem Emissionsmaximum bei ungefähr 475 nm), CsI:Na (Caesiumiodid dotiert mit Natrium mit einem Emissionsmaximum bei ungefähr 420 nm), oder NaI:Tl (Thallium dotiertes Natriumiodid mit einem Emissionsmaximum bei ungefähr 415 nm), $Bi_4GeO_{12}$ bzw. BGO (Wismutgermanat mit einem Emissionsmaximum bei ungefähr 480 nm), $Gd_2SiO_5$ bzw. GSO (Gadoliniumoxyorthsilicat dotiert mit Cer mit einem Emissionsmaximum bei ungefähr 440 nm), oder CsBr:Eu (Caesiumbromid dotiert mit Europium mit einem Emissionsmaximum bei ungefähr 445nm) dar, welche gut mit typischen Wide-band gap Halbleitern (Halbleitern mit großer Bandlücke) wie Poly[(9,9-di-n-octylfluorenyl-2,7-diyl)-alt-(benzo[2,1,3]thiadiazol-4,8-diyl)] (F8BT) (Absorptionsmaximum bei 460nm) oder anderen Polyfluoren- (PFO) Polymeren und Co-Polymeren (Absorption bei 380-460 nm) kombiniert werden.

Rote Szintillatoren wie $Lu_2O_3$:Eu (Lutetiumoxid dotiert mit Europium mit einem Emissionsmaximum bei ungefähr 610-625 nm), $Lu_2O_3$:Tb (Lutetiumoxid dotiert mit Terbium mit einem Emissionsmaximum bei ungefähr 610-625 nm) oder $Gd_2O_3$:Eu (Gadoliniumoxysulfid dotiert mit Europium mit einem Emissionsmaximum bei ungefähr 610-625 nm), YGdO:(Eu,Pr) (Europium und/oder Praseodym dotiertes Yttrium gadoliniumoxid mit einem Emissionsmaximum bei ungefähr 610 nm), GdGaO:Cr,Ce (Chrom und/oder Caesium dotiertes Gadoliniumgalliumoxid), oder CuI (Kupferiodid mit einem Emissionsmaximum bei ungefähr 720 nm) können gut mit Absorbern, wie sie für die OPV (organische Photovoltaik) entwickelt wurden, kombiniert werden, beispielsweise Poly[2,1,3-benzothiadiazol-4,7-diyl[4,4-bis(2-ethylhexyl)-4H-cyclopenta[2,1-b:3, 4-b']dithiophen-2,6-diyl]] (PCPDTBT), Squaraine (z.B. Hydrazon End-verkappte symmetrische Squaraine mit glykolischer Funktionalisierung oder Diazulensquaraine), Polythieno[3,4-b]thiophen (PTT), Poly(5,7-bis(4-decanyl-2-thienyl)-thieno(3,4-b)diathiazolthiophen-2,5) (PDDTT).

Besonders hervorzuheben gemäß bevorzugten Ausführungsformen sind unter diesen Paaren: Gd2O2S:Tb oder YAG:Ce in Kombination mit P3HT:PCBM, Lu2SiO5:Ce in Kombination mit F8BT oder YGdO:Eu mit PCPDTBT.

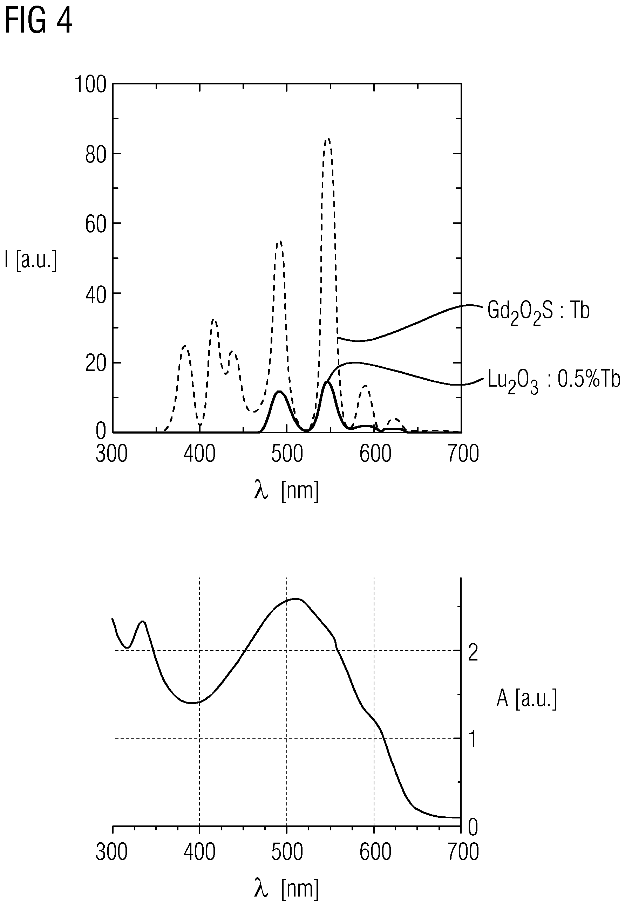

Eine beispielhafte Abstimmung/Anpassung der Szintillatoremission (z.B. GOS bzw. $Lu_2O_3$:Tb, grün) auf die Polymerabsorption (z.B. P3HT) ist in Figur 4 angegeben, wobei die Anpassung aus dem Emissionsspektrum der Szintillatoren (links) und dem Absorptionsspektrum der organischen Matrix (rechts) klar hervorgeht.

In bestimmten Ausführungsformen ist die Masse der Szintillatorpartikel mindestens 8 mal größer ist als die Masse der organischen Matrix.

Dies lässt sich anhand der folgenden theoretischen Überlegungen darlegen.

Anzustrebende Hüllendicke und benötigte Mengenansätze:

Das Gesamtvolumen einer beispielhaften hybriden Photodiode setzt sich aus dem Szintillatorkern $V_{Scintillator}$ sowie den Mantelvolumen der Bulk-Hetero-Junction $V_{BHJ}$ (organische Matrix) zusammen. Um das optimale Verhältnis einwiegen zu können, benötigt man die Dichten der Bulk-Hetero-Junction $\rho_{BHJ}$ sowie des Szintillators $\rho_{Scintillator}$, um auf das jeweilige Gewicht $W_{BHJ}$ und $W_{Scintillator}$ zu kommen.

Gesamtvolumen ($V_{Gesamt}$) der hybriden Photodiode:

$$V_{Gesamt} = V_{BHJ} + V_{Scintillator} = \frac{W_{BHJ}}{\rho_{BHJ}} + \frac{W_{Scintillator}}{\rho_{Scintillator}}$$

Um die markanten Größen des Verhältnisses der Volumina sowie der Mengenangaben zu verdeutlichen, wird dies in Volumenprozent und Mengenprozent im Vergleich zum Gesamtvolumen und der -menge angegeben. Die folgenden zwei Formeln geben dies wieder.

Volumenprozentansatz der BHJ ($V_{BHJ}\%$):

$$V_{BHJ}\% = 100 \cdot \frac{V_{BHJ}}{V_{Gesamt}}$$

Mengenprozentansatz der BHJ ($W_{BHJ}\%$):

$$W_{BHJ}\% = 100 \cdot \frac{W_{BHJ}}{W_{Scintillator} + W_{BHJ}}$$

Das anzustrebende Hüllenvolumen erhält man über die gewünschte Absorption der Bulk-Hetero-Junction. Die Absorption kann über die Schichtdicke $r_{BHJ}$ des Hüllenvolumens und demnach über die Absorptionslänge des emittierten Lichts eingestellt werden. Das Hüllenvolumen setzt sich aus dem Gesamtvolumen mit den Radien $r_{Scintillator}$ und $r_{BHJ}$ abzüglich der Innenkugel, dem Szintillator, zusammen. Es lässt sich, wie folgt, berechnen.

Anzustrebendes Hüllenvolumen ($V_{BHJ}$) und -dicke ($r_{BHJ}$)

$$V_{BHJ} = \frac{4\pi}{3}((r_{Scintillator} + r_{BHJ})^3 - (r_{Scintillator})^3)$$

Als Beispiel für einen Szintillator mit Radius $r_{Scintilla-tor}$ = 1,8 $\mu$m und einer angestrebten Mantelabsorptions-schichtdicke von $r_{BHJ}$ = 0,15 $\mu$m ergibt sich ein optimaler Füllfaktor $V_{BHJ}\%$: $V_{Scintillator\%}$ von 37%:63%. Bei typischen Dichten von $\rho_{BHJ}$ = 1,2 g/ml sowie $\rho_{Scintillator}$ = 7,2 g/ml ergibt dies ein Gewichtsverhältnis $W_{BHJ}$:$W_{Scintillator}$ von etwa 1:10.

Hierbei ist noch insbesondere darauf hinzuweisen, dass dieses Masseverhältnis abhängig ist vom Durchmesser des Szintillators und dessen Dichte. Je größer der Partikel, desto weniger Organikanteil wird benötigt, um die oben genannten Bedingungen zu erfüllen. Die Volumenverhältnisse sind durch den Durchmesser der Szintillatoren und die Eindringtiefe des Lichts in die Organik gegeben. Mittels der Dichte kann dann das Masseverhältnis gemäß den obigen Formeln berechnet werden. Beispielsweise ist für einen 2 $\mu$m großen Gd2O2S-Partikel bei einer Eindringtiefe von 130 nm ein Massenverhältnis von etwa 1:14 optimal, während für einen 10 $\mu$m großen Partikel das Massenverhältnis auf 1:75 ansteigt.

Gemäß bestimmten Ausführungsformen umfassen der erste elektrische Kontakt und/oder der zweite elektrische Kontakt ein Material bzw. bestehen aus diesem, welches die emittierte Strahlung der Szintillatorpartikel reflektiert. Hierbei sind beispielhaft Metalle wie Au, Ag, Pt, Al oder Cu zu nennen, jedoch sind eine Vielzahl weiterer Materialien bekannt, so dass die Materialien der elektrischen Kontakte nicht weiter beschränkt sind, so sie die emittierte Strahlung der Szintillatorpartikel reflektieren. Durch die entsprechende Ausgestaltung kann das detektierte Signal des Detektors weiter verbessert werden. Durch die reflektierende Wirkung der Kontakte auf die emittierte Strahlung kann erreicht werden, dass emittiertes Licht nicht aus der aktiven Zone entweicht.

Der erfindungsgemäße Detektor kann in bestimmten Ausführungsformen optional Zwischenschichten / Interlayer enthalten, welche den Übergang zwischen der aktiven Schicht und den Kontaktschichten und somit die Kontaktierung der Probe verbessern und welche beispielsweise umhüllte Szintillatorpartikel umfassen können.

Gemäß einem weiteren Aspekt betrifft die Erfindung zudem ein Verfahren zur Herstellung eines Detektors für hochenergetische Strahlung, insbesondere für Röntgen- und/oder UV-Strahlung, umfassend:

(i) Bereitstellen eines Substrats mit einem ersten elektrischen Kontakt;
(ii) optional Beschichten mit einer ersten Zwischenschicht;
(iii) Beschichten mit einer Schicht umfassend eine organische Matrix eines photoaktiven Materials und darin verteilte, nicht lösliche Szintillatorpartikel;
(iv) optional Beschichten mit einer zweiten Zwischenschicht; und
(v) Beschichten mit einem zweiten elektrischen Kontakt; wobei

das Mischungsverhältnis zwischen Szintillatorpartikeln und organischer Matrix beim Beschichten in Schritt (iii) so gewählt wird, dass der mit der organischen Matrix gefüllte Zwischenraum jeweils einen Abstand zwischen zwei benachbarten Szintillatorpartikeln aufweist, der im Wesentlichen maximal der fünffachen absorbierten Wellenlänge der emittierten Strahlung der Szintillatorpartikel entspricht, wobei das Mischungsverhältnis zwischen Szintillatorpartikeln (31) und organischer Matrix (32) so gewählt wird, dass die kumulierte Dicke der organischen Matrix (32) zwischen den beiden Kontakten (22; 26) mindestens dreimal der Eindringtiefe (33) entspricht.

Gemäß bestimmten Ausführungsformen haben die Szintillatorpartikel einen Durchmesser von 0,01 bis 50 $\mu$m. Gemäß bevorzugten Ausführungsformen haben die Szintillatorpartikel einen Durchmesser von 0,1-30 $\mu$m, bevorzugt 1-10 $\mu$m, welche auf die Interaktionslänge von hochenergetischen Elektronen, welche durch Röntgenquanten ausgelöst werden, angepasst ist. Zudem ist die Masse der Szintillatorpartikel gemäß bestimmten Ausführungsformen des erfindungsgemäßen Verfahrens mindestens 8-mal größer als die Masse der organischen Matrix.

In bestimmten Ausführungsformen des erfindungsgemäßen Verfahrens wird zur Erzeugung der Beschichtung in Schritt (iii) eine Suspension der Szintillatorpartikel in der organischen Matrix und mindestens einem Lösungsmittel hergestellt, die dann durch Rakeln, Schleudern oder Sprühen im Schritt (iii) aufgetragen wird und ggf. durch Abdampfen des verbleibenden Lösungsmittels getrocknet wird. Hierbei wird die Suspension in bevorzugten Ausführungsformen während der Verarbeitung kontinuierlich durchmischt/gerührt. Dies kann auch beispielsweise durch Umwälzen in einem Sprühkopf erfolgen. Zur Unterstützung kann hierbei zudem noch Ultraschall angewandt werden.

Gemäß bestimmten Ausführungsformen wird beim erfindungsgemäßen Verfahren zur Erzeugung der Beschichtung in Schritt (iii) eine Suspension umfassend Szintillatorpartikel, mindestens einen organischen Halbleiter und mindestens einem Lösungsmittel hergestellt, die dann durch Rakeln, Schleudern oder Sprühen im Schritt (iii) aufgetragen wird und ggf. durch Abdampfen des verbleibenden Lösungsmittels getrocknet wird.

Gemäß bestimmten Ausführungsformen wird die Suspension während der Verarbeitung kontinuierlich durchmischt/gerührt.

Gemäß weiteren bestimmten Ausführungsformen wird zur Erzeugung der Beschichtung in Schritt (iii) ein Pulver bestehend aus mindestens von einem organischen Halbleiter - als photoaktives organisches Material - umhüllten Szintillatorpartikeln durch beispielsweise Sintern im Schritt (iii) aufgetragen.

In einer alternativen Ausführungsform kann die Suspension durch Fällung und anschließende Abführung des Lösungsmittels in ein Pulver verwandelt werden, welches dann beispielsweise mittels Sintern auf ein Substrat aufgebracht wird.

Beispiele

Die Erfindung wird im Anschluss anhand einiger beispielhafter Ausführungsformen dargestellt, die diese jedoch nicht einschränken.

Ein beispielhafter Röntgendetektor ist in Figur 2 dargestellt, und besteht aus:

◦ Einem Substrat 21, was starr oder flexibel sein kann (z.B. Glas oder Folie) und beispielsweise eine TFT-Matrix aufweist aus amorphem Silizium, organischen Materialien oder einem Oxid (z.B. InGaZnO)

∘ Einer unteren Kontaktschicht 22, bevorzugt aus einem Material mit hoher Austrittsarbeit, z.B. ITO, Au, Pt, Pd; man kann bei den dicken Schichten auch gleiche Materialien für die Elektroden für den unteren und oberen Kontakt nehmen, weil der Dunkelwiderstand aufgrund der Organik schon so hoch ist, dass man praktisch einen Photoleiter hat und keine zusätzliche Barriere von den Kontakten benötigt.

∘ Einer aktiven Schicht 24 bestehend aus einer photosensitiven leitfähigen organischen Matrix (z.B. bulk-hetero-junction aus P3HT und PCBM) und einem röntgenabsorbierenden und lichtemittierenden Szintillator (z.B. GOS)

∘Und einer oberen Kontaktschicht 26 mit niedriger Austrittsarbeit, z.B. Al, Ca/Ag, Ba/Al, Ca/Al

∘ Wobei das Mischungsverhältniss zwischen der Matrix und dem Szintillator so eingestellt ist, dass eine optimale Ladungsträgergeneration und -extraktion gegeben ist.

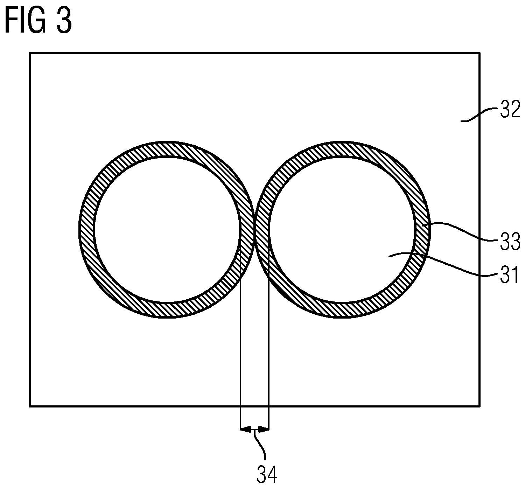

∘ Dies wird erreicht, indem das Mischungsverhältnis so gewählt wird, dass der mit Matrixmaterial gefüllte Zwischenraum zwischen zwei Partikeln maximal der doppelten Eindringtiefe des emittierten Lichts des Szintillators entspricht, wie in Figur 3 dargestellt.

∘ Optional können Zwischenschichten / Interlayer 23 und/oder 25 vorgesehen sein, welche den Kontakt zwischen der aktiven Schicht und den Kontaktschichten verbessern und welche beispielsweise umhüllte Szintillatorpartikel umfassen können.

Ein optimales Mischungsverhältnis zwischen organischer Matrix und Szintillatorpartikeln, welches bei einem Abstand zwischen den Szintillatorpartikeln auftritt, welches der doppelten Eindringtiefe der Emission des Szintillators entspricht, ist in Figur 3 dargestellt, in der 31 den lichtemittierenden Szintillatorpartikel, 32 die organische (Halbleiter-) Matrix, 33 die Eindringtiefes des emittierten Lichts in den organischen Halbleiter und 34 den Szintillatorabstand darstellen.

Entgegen der naheliegenden Annahme, dass man einen Kompromiss zwischen hohem Szintillator-Anteil (=gute Röntgenabsorption) und hohem Organik-Anteil (gute Leitfähigkeit) finden muss, wurde gefunden, dass hohe Szintillatoranteile vorteilhaft sind, um leitfähige Kanäle unter Röntgenanregung zu generieren.

Typisches Bauteil, Elektrische Charakterisierung und Röntgensensitivität:

Ein beispielhafter erfindungsgemäßer Röntgendetektor (Photodiode) basiert auf dem Prinzip der Figur 3. In der aktiven organischen Schicht wird eine Kombination von Szintillatorpartikeln von $Gd_2O_2S$:Tb, eingebettet in einer photo- und elektrisch aktiven BHJ-Hülle bestehend aus P3HT und PCBM, verwendet. Die BHJ-Schicht wird dabei begrenzt durch eine ITO-Anode und eine mittels thermischer Aufdampfung abgeschiedenen Al-Kathode. Die Schichtdicke der Al-Kathode beträgt ca. 250-500nm, während die Schichtdicke der ITO-Anode ca. 80-200 nm beträgt. Die aktive Diodenfläche beträgt 1-100 mm$^2$.

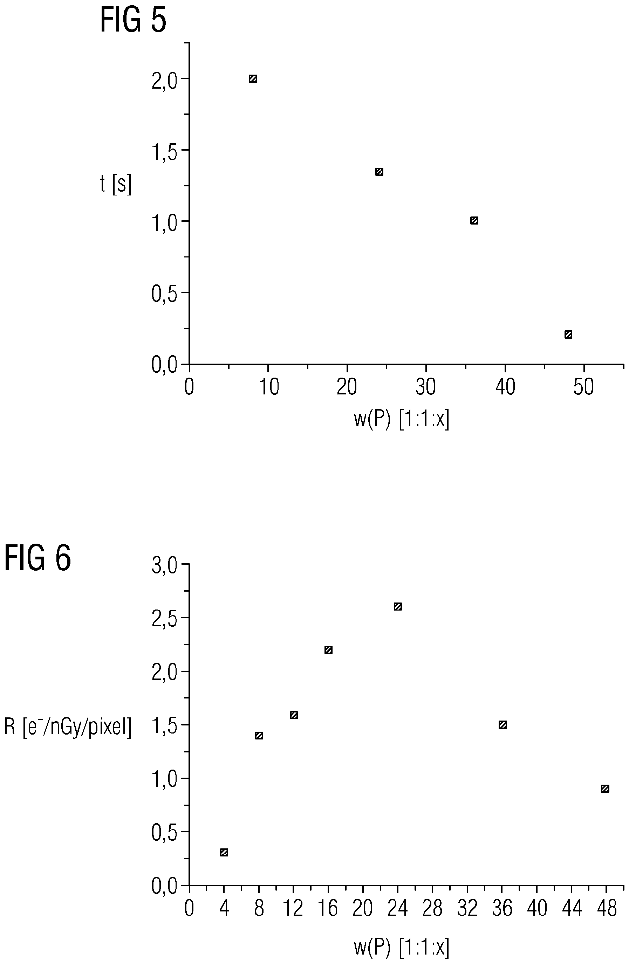

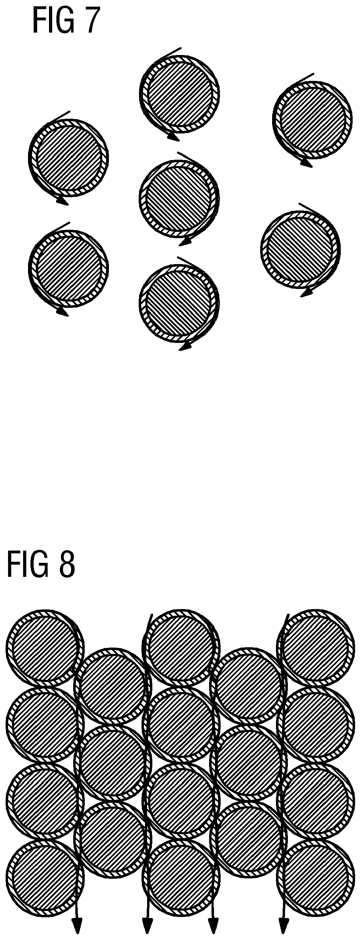

Abbildung 5 stellt die Reaktionszeit einer solchen beispielhaften Photodiode auf einen Röntgenstrahlpuls in Abhängigkeit des Szintillator-Anteils in der Probe dar. Die Schichtdicke "d" aller Proben beträgt ca. 8$\mu$m bei einer angelegten Spannung "V" von ca. -8 V, welche einem elektrischen Feld von ca. -1 V/pm entspricht. Als Szintillatoren kamen im gewählten Beispiel Gd2O3S-Partikel mit einem mittleren Durchmesser von D=1,8 $\mu$m zum Einsatz, und als organischen Matrix eine Mischung von P3HT und PCBM (Gewichtsverhältnis 1:1). Die Reaktionszeit t nimmt mit steigendem GOS-Anteil x ab und somit die Geschwindigkeit der Diode zu. Bei homogener Röntgenstrahlanregung durch die Diode hindurch entsteht um die Szintillatorpartikel, durch Aussendung von grünem Licht, ein stark leitfähiger Mantel. Ist der GOS-Anteil in der Diode hoch genug, dass sich diese Mäntel überlappen, entsteht ein leitfähiger Pfad (conductive channel) von der Boden- zur Deckenelektrode, und dies erhöht die eigentlich schlechte Leitfähigkeit der organischen Halbleiter enorm, was in einer schneller Geschwindigkeit und kürzeren Reaktionszeiten (risetime) resultiert. Figuren 7 und 8 zeigen schematisch das Funktionsprinzip bei niedrigem (Fig. 7) und hohem (Fig. 8) GOS-Anteil. In Fig. 7 sind die leitfähigen Kanäle nicht verbunden. Ladungsträger müssen hochresistive Zwischenräume durchlaufen, welches in einer langsamen Detektorcharakteristik resultiert. In Fig. 8 berühren sich die leitfähigen Schalen und leitfähige Pfade bilden sich aus.

Fig. 6 zeigt die Koversionsrate von Röntgenquanten zu detektierten Elektronen bei variierendem Szintillator-Anteil "x" in erfindungsgemäßen Detektoren, die wie oben hergestellt sind. Die Schichtdicke "d" aller Proben beträgt wiederum 8 $\mu$m bei einer angelegten Spannung "V" von ca. -8V, welche einem elektrischen Feld von ca. -1V/$\mu$m entspricht. Die GOS-Partikel haben einen durchschnittlichen Durchmesser von D=1,8 $\mu$m. Bei dieser Schichtdicke und Partikelgröße erhält man ein Maximum der Sensitivität bei ca. 1:1:24, da hier das Verhältnis zwischen der Eindringtiefe des szintilliertem grünen Licht zur gesamtorganischer Schichtdicke (Grünabsorber) in vertikaler Ausrichtung der photoaktiven Schicht gut angepasst ist. Bei höheren Schichtdicken verschiebt sich dieses Maximum in Richtung höherem GOS-Anteil (benötigte gesamtorganische Schichtdicke bei ca. 300-500 nm).

In der Praxis können zudem noch folgende Überlegungen für den minimalen Anteil des Polymers von Relevanz sein:

a) das Polymer dient als "Kleber" für den Zusammenhalt der Partikel

b) eine ausreichend hohe Absorption innerhalb eines Radius von ca. 20-50$\mu$m sollte gegeben sein, um den optischen Cross-Talk zu minimieren und das Entweichen der generierten Photonen aus der aktiven Schicht des Detektors zu verhindern, und

c) in dem Gefüge soll sich keine hohe Anzahl von "Sackgassen" bilden, welche den Ladungstransport verhindern, bzw. in einer hohen Rekombinationsrate der Ladungsträger resultieren würde.

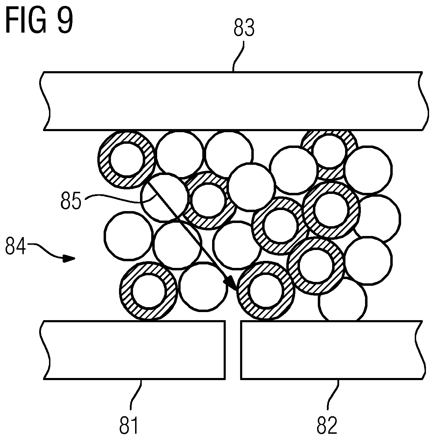

Mögliche Verlustpfade, welche sich bei zu hohem Anteil an Szintillatorpartikeln ergeben können, sind in Figur 9 dargestellt, in der die organische Matrix mit den Szintillatorpartikeln zwischen zwei unteren Kontakten 81, 82, beispielsweise in einer Detektormatrix, und einem oberen Kontakt 83 eingebracht ist. Bei einem zu hohen Anteil an Szintillatorpartikeln besteht die Möglichkeit von nicht geschlossenen Strompfaden 84, welche eine effiziente Ladungsträgerextraktion verhindern, sowie die Möglichkeit einer zu geringen Absorption 85, welche zu optischem Cross-Talk führen kann oder dazu, dass Photonen den Detektor verlassen. Zudem kann sich ein zu hoher Szintillatoranteil negativ auf die Stabilität des Detektors auswirken.

Durch die erfindungsgemäße Realisierung ist es möglich, (Röntgen-)Detektoren zu realisieren, welche wesentlich schneller ansprechen und weniger Leitungsverluste aufweisen. Gleichzeitig kann eine hohe (Röntgen)-Absorption gewährleistet werden. Schließlich bietet das vorgeschlagene System Kostenvorteile, da der Anteil der teuren Komponente (Organik) minimiert wird.

**Patentansprüche**

1. Detektor für hochenergetische Strahlung, insbesondere für Röntgen-, Gamma-, und/oder UV-Strahlung, umfassend:

   - (a) ein Substrat (21) mit einem ersten elektrischen Kontakt (22);
   - (b) optional eine erste Zwischenschicht (23);
   - (c) eine Schicht (24) umfassend eine organische Matrix (32) eines photoaktiven Materials und darin verteilte, nicht lösliche Szintillatorpartikel (31);
   - (d) optional eine zweite Zwischenschicht (25); und
   - (e) einen zweiten elektrischen Kontakt (26); wobei das Mischungsverhältnis zwischen Szintillatorpartikeln (31) und organischer Matrix (32) in der Schicht (c) so gewählt wird, dass der mit der organischen Matrix (32) gefüllte Zwischenraum jeweils einen Abstand (34) zwischen zwei benachbarten Szintillatorpartikeln (31) aufweist, der im Wesentlichen maximal der fünffachen Eindringtiefe (33) der emittierten Strahlung der Szintillatorpartikel (31) entspricht
   **dadurch gekennzeichnet, dass**
   das Mischungsverhältnis zwischen Szintillatorpartikeln (31) und organischer Matrix (32) so gewählt wird, dass die kumulierte Dicke der organischen Matrix (32) zwischen den beiden Kontakten (22; 26) mindestens dreimal der Eindringtiefe (33) entspricht.

2. Detektor gemäß Anspruch 1, wobei die Szintillatorpartikel (31) einen Durchmesser von 0,01 bis 50 μm haben.

3. Detektor gemäß Anspruch 1 oder 2, wobei der Abstand (34) zwischen zwei Szintillatorpartikeln (31) zwischen 30 bis 3000 nm, bevorzugt zwischen 100 bis 900 nm liegt.

4. Detektor gemäß einem der vorgehenden Ansprüche, wobei die Kombination von Szintillatorpartikeln (31) und organischer Matrix (32) ausgewählt ist aus Gd2O2S:Tb oder YAG:Ce in Kombination mit P3HT:PCBM, Lu2SiO5:Ce in Kombination mit F8BT oder YGdO:Eu in Kombination mit PCPDTBT.

5. Detektor gemäß Anspruch 4, wobei die Kombination von Szintillatorpartikeln (31) und organischer Matrix (32) Gd2O2S:Tb in Kombination mit P3HT:PCBM ist.

6. Detektor gemäß einem der vorgehenden Ansprüche, wobei der jeweilige Abstand (34) zwischen zwei Szintillatorpartikeln (31) weniger als der dreifachen Eindringtiefe (33) der emittierten Strahlung des Szintillatorpartikels (31) entspricht.

7. Detektor gemäß einem der vorgehenden Ansprüche, wobei die Masse der Szintillatorpartikel (31) mindestens 8 mal größer ist als die Masse der organischen Matrix (32).

8. Detektor gemäß einem der vorgehenden Ansprüche, wobei der erste elektrische Kontakt(22) und/oder der zweite elektrische Kontakt (26) ein Material umfassen oder aus diesem bestehen, welches die emittierte Strahlung der Szintillatorpartikel (31) reflektiert.

9.  Verfahren zur Herstellung eines Detektors für hochenergetische Strahlung, insbesondere für Röntgen-, Gamma- und/oder UV-Strahlung, umfassend:

    (i) Bereitstellen eines Substrats (21) mit einem ersten elektrischen Kontakt (22);
    (ii) optional Beschichten mit einer ersten Zwischenschicht (23) ;
    (iii) Beschichten mit einer Schicht (24) umfassend eine organische Matrix (32) eines photoaktiven Materials und darin verteilte, nicht lösliche Szintillatorpartikel (31);
    (iv) optional Beschichten mit einer zweiten Zwischenschicht (25); und
    (v) Beschichten mit einem zweiten elektrischen Kontakt (26); wobei
    das Mischungsverhältnis zwischen Szintillatorpartikeln (31) und organischer Matrix (32) beim Beschichten in Schritt (iii) so gewählt wird, dass der mit der organischen Matrix (32) gefüllte Zwischenraum jeweils einen Abstand (34) zwischen zwei Szintillatorpartikeln (31) aufweist, der im Wesentlichen maximal der fünffachen Eindringtiefe (33) der emittierten Strahlung der Szintillatorpartikel (31) entspricht
    **dadurch gekennzeichnet, dass**
    das Mischungsverhältnis zwischen Szintillatorpartikeln (31) und organischer Matrix (32) so gewählt wird, dass die kumulierte Dicke der organischen Matrix (32) zwischen den beiden Kontakten (22; 26) mindestens dreimal der Eindringtiefe (33) entspricht.

10. Verfahren gemäß Anspruch 9, wobei die Szintillatorpartikel (31) einen Durchmesser von 0,01 bis 50 μm haben.

11. Verfahren gemäß Anspruch 9 oder 10, wobei die Masse der Szintillatorpartikel (31) mindestens 8 mal größer ist als die Masse der organischen Matrix (32).

12. Verfahren gemäß einem der Ansprüche 9 bis 11, wobei zur Erzeugung der Beschichtung (24) in Schritt (iii) eine Suspension umfassend Szintillatorpartikel (31), mindestens einen organischen Halbleiter und mindestens einem Lösungsmittel hergestellt wird, die dann durch Rakeln, Schleudern oder Sprühen im Schritt (iii) aufgetragen wird und ggf. durch Abdampfen des verbleibenden Lösungsmittels getrocknet wird.

13. Verfahren gemäß Anspruch 12, wobei die Suspension während der Verarbeitung kontinuierlich durchmischt/gerührt wird.

14. Verfahren gemäß einem der Ansprüche 9 bis 11, wobei zur Erzeugung der Beschichtung (24) in Schritt (iii) ein Pulver bestehend aus mindestens von einem organischen Halbleiter umhüllten Szintillatorpartikel (31) durch Sintern im Schritt (iii) aufgetragen wird.

**Claims**

1.  Detector for high-energy radiation, in particular for X-ray, gamma, and/or UV radiation, including:

    - (a) a substrate (21) with a first electrical contact (22);
    - (b) optionally a first intermediate layer (23);
    - (c) a layer (24) that includes an organic matrix (32) made of a photoactive material and non-soluble scintillator particles (31) essentially distributed therein,
    - (d) optionally a second intermediate layer (25), and
    - (e) a second electrical contact (26), wherein the mixing ratio between the scintillator particles (31) and the organic matrix (32) is selected in the layer (c) such that the space filled with the organic matrix (32) has in each case a distance (34) between two adjacent scintillator particles (31) that essentially corresponds at most to five times the depth of penetration (33) of the radiation emitted by the scintillator particles (31),
    **characterised in that**
    the mixing ratio between the scintillator particles (31) and the organic matrix (32) is selected such that the cumulative thickness of the organic matrix (32) between the two contacts (22; 26) corresponds to at least three times the depth of penetration (33).

2.  Detector according to claim 1, wherein the scintillator particles (31) have a diameter of 0.01 to 50 μm.

3.  Detector according to claim 1 or claim 2, wherein the distance (34) between two scintillator particles is between 30 and 3000 nm, preferably between 100 to 900 nm.

4. Detector according to one of the preceding claims, wherein the combination of scintillator particles (31) and organic matrix (32) is selected from Gd2O2S:Tb or YAG:Ce in combination with P3HT:PCBM, Lu2SiO5:Ce in combination with F8BT or YGdO:Eu in combination with PCPDTBT.

5. Detector according to claim 4, wherein the combination of scintillator particles (31) and organic matrix (32) is Gd2O2S:Tb in combination with P3HT:PCBM..

6. Detector according to one of the preceding claims, wherein the respective distance (34) between two scintillator particles (31) is less than three times the depth of penetration (33) of the radiation emitted by the scintillator particle (31).

7. Detector according to one of the preceding claims, wherein the mass of the scintillator particles (31) is at least 8 times greater than the mass of the organic matrix (32).

8. Detector according to one of the preceding claims, wherein the first electrical contact (22) and/or the second electrical contact (26) include a material that reflects the radiation emitted by the scintillator particles (31) or consist thereof.

9. Method for producing a detector for high-energy radiation, in particular for X-ray, gamma and/or UV radiation, including:

(i) providing a substrate (21) with a first electrical contact (22);
(ii) optionally coating with a first intermediate layer (23);
(iii) coating with a layer (24) that includes an organic matrix (32) of a photoactive material and non-soluble scintillator particles (31) distributed therein;
(iv) optionally coating with a second intermediate layer (25); and
(v) coating with a second electrical contact (26); wherein during coating, the mixing ratio between the scintillator particles (31) and the organic matrix (32) is selected in step (iii) such that the space filled with the organic matrix (32) has in each case a distance (34) between two scintillator particles (31) that essentially corresponds to at most five times the depth of penetration (33) of the radiation emitted by the scintillator particles (31)
**characterised in that**
the mixing ratio between the scintillator particles (31) and the organic matrix (32) is selected such that the cumulative thickness of the organic matrix (32) between the two contacts (22; 26) corresponds to at least three times the depth of penetration (33).

10. Method according to claim 9, wherein the scintillator particles (31) have a diameter of 0.01 to 50 $\mu$m.

11. Method according to claim 9 or 10, wherein the mass of the scintillator particles (31) is at least 8 times greater than the mass of the organic matrix (32).

12. Method according to one of claims 9 to 11, wherein in order to create the coating (24) in step (iii), a suspension that includes scintillator particles (31), at least one organic semiconductor and at least one solvent is produced, which is then applied in step (iii) by knife-, spin- or spray-coating and optionally dried by evaporating off the remaining solvent.

13. Method according to claim 12, wherein the suspension is continuously mixed/stirred during processing.

14. Method according to one of claims 9 to 11, wherein in order to create the coating (24) in step (iii), a powder consisting of scintillator particles (31) encased in at least one organic semiconductor is applied by sintering in step (iii).

**Revendications**

1. Détecteur de rayonnement de grande énergie, notamment de rayonnement X, gamma et/ou UV, comprenant :

- (a) un substrat (21) ayant un premier contact (22) électrique ;
- (b) éventuellement, une première couche (23) intermédiaire ;
- (c) une couche (24), comprenant une matrice (32) organique d'un matériau photo-actif et des particules (31) de scintillateur insolubles, qui y sont réparties ;
- (d) éventuellement, une deuxième couche (25) intermédiaire ;

- (e) un deuxième contact (26) électrique, le rapport de mélange entre les particules (31) de scintillateur et la matrice (32) organique dans la couche (c) étant choisi de manière à ce que l'espace intermédiaire, rempli de la matrice (32) organique, ait respectivement une distance (34) entre deux particules (31) de scintillateur voisines, qui correspond sensiblement au maximum à cinq fois la profondeur (33) de pénétration du rayonnement émis des particules (31) de scintillateur,

**caractérisé en ce que**

le rapport de mélange, entre les particules (31) de scintillateur et la matrice (32) organique est choisi de manière à ce que l'épaisseur cumulée de la matrice (32) organique entre les deux contacts (22 ; 26) corresponde au moins à trois fois la profondeur (33) de pénétration.

2. Détecteur suivant la revendication 1, dans lequel les particules (31) de scintillateur ont un diamètre allant de 0,01 à 50 μm.

3. Détecteur suivant la revendication 1 ou 2, dans lequel la distance (34) entre deux particules (31) de scintillateur est comprise entre 30 et 3000 nm, de préférence entre 100 et 900 nm.

4. Détecteur suivant l'une des revendications précédentes, dans lequel la combinaison de particules (31) de scintillateur et de matrice (32) organique est choisie parmi Gd2O2S :Tb ou YAG :Ce en combinaison avec P3HT :PCBM, Lu2SiO5 : Ce en combinaison avec F8BT ou YGdO :Eu en combinaison avec PCPDTBT.

5. Détecteur suivant la revendication 4, dans lequel la combinaison de particules (31) de scintillateur et de matrice (32) organique est Gd2O2S :Tb en combinaison avec P3HT : PCBM.

6. Détecteur suivant l'une des revendications précédentes, dans lequel la distance (34) respective entre deux particules (31) de scintillateur correspond à moins que trois fois la profondeur (33) de pénétration du rayonnement émis de la particule (31) de scintillateur.

7. Détecteur suivant l'une des revendications précédentes, dans lequel la masse des particules (31) de scintillateur est au moins 8 fois plus grande que la masse de la matrice (32) organique.

8. Détecteur suivant l'une des revendications précédentes, dans lequel le premier contact (22) électrique et/ou le deuxième contact (26) électrique comprend un matériau ou en est constitué, qui réfléchit le rayonnement émis des particules (31) de scintillateur.

9. Procédé de fabrication d'un détecteur de rayonnement de grande énergie, notamment de rayonnement X, gamma et/ou UV, comprenant :

(i) on se procure un substrat (21) ayant un premier contact (22) électrique ;
(ii) on revêt, éventuellement, d'une première couche (23) intermédiaire ;
(iii) on revêt d'une couche (24) comprenant une matrice (32) organique d'une matière photo-active et des particules (31) de scintillateur insolubles, qui y sont réparties ;
(iv) on revêt, éventuellement, d'une deuxième couche (25) intermédiaire ; et
(v) on revêt d'un deuxième contact (26) électrique ; dans lequel
on choisit le rapport de mélange entre les particules (31) de scintillateur et la matrice (32) organique lors du revêtement dans le stade (iii), de manière à ce que l'espace intermédiaire, rempli de la matrice (32) organique, ait respectivement une distance (34) entre deux particules (31) de scintillateur voisines, qui correspond sensiblement au maximum à cinq fois la profondeur (33) de pénétration du rayonnement émis des particules (31) de scintillateur,

**caractérisé en ce que**

le rapport de mélange, entre les particules (31) de scintillateur et la matrice (32) organique est choisi de manière à ce que l'épaisseur cumulée de la matrice (32) organique entre les deux contacts (22 ; 26) corresponde au moins à trois fois la profondeur (33) de pénétration.

10. Procédé suivant la revendication 9, dans lequel les particules (31) de scintillateur ont un diamètre de 0,01 à 50 μm.

11. Procédé suivant la revendication 9 ou 10, dans lequel la masse des particules (31) de scintillateur est au moins 8 fois plus grande que la masse de la matrice (32) organique.

**12.** Procédé suivant l'une des revendications 9 à 11, dans lequel, pour produire le revêtement (24) dans le stade (iii), on prépare une suspension, comprenant des particules (31) de scintillateur, au moins un semi-conducteur organique et au moins un solvant, que l'on dépose ensuite au stade (iii) à la racle, par centrifugation ou par pulvérisation et qu'éventuellement on sèche par évaporation du solvant restant.

**13.** Procédé suivant la revendication 12, dans lequel on mélange/agite la suspension continuellement pendant le traitement.

**14.** Procédé suivant l'une des revendications 9 à 11, dans lequel, pour produire le revêtement (24) dans le stade (iii), on dépose, par frittage dans le stade (iii) une poudre constituée de particules (31) de scintillateur enrobées d'au moins un semi-conducteur organique.

FIG 1

I

II

FIG 2

FIG 3

32

33

31

34

# FIG 4

FIG 5

FIG 6

FIG 7

FIG 8

FIG 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6483099 B1
- DE 10137012 A1
- DE 102008029782 A1
- DE 102010043749 A1
- EP 2453263 A2
- US 2013032720 A1